# EUROPEAN PATENT APPLICATION

(11) **EP 4 822 787 A2**
(43) Date of publication of application: **14.10.2026**
(21) Application number: 26201226.3
(22) Date of filing: 04.03.2022
(51) Int. Cl.: H01M 4/70

(54) **CYLINDRICAL SECONDARY BATTERY, BATTERY PACK, AND MOVEMENT MEANS**

(30) Priority: 08.03.2021 KR 20210030315
(62) Document number(s) of the earlier application(s) in accordance with Art. 76 EPC: 22767410.8 / 4 307 462
(71) Applicant: LG Energy Solution, Ltd., Seoul 07335 (KR)
(72) Inventor: PARK, Kyeong Hoon, 34122 Daejeon (KR); JUNG, Jimin, 34122 Daejeon (KR); LIM, Jae Won, 34122 Daejeon (KR); LEE, Je Jun, 34122 Daejeon (KR); KIM, Hak Kyun, 34122 Daejeon (KR)
(74) Representative: Goddar, Heinz J.

(57) **Abstract**

Disclosed is a cylindrical secondary battery, a battery pack, and a transport means, the cylindrical secondary battery including an electrode assembly having a structure in which a first electrode, a second electrode, and a separator interposed between the first and second electrodes are sequentially stacked and wound, the first electrode including a non-coated portion having no active material applied onto one surface of a current collector, the non-coated portion including a first electrode tab bent from an end of the electrode assembly toward a winding center or an outer periphery, a battery can configured to accommodate the electrode assembly through an opening portion formed at one side of the battery can, a current collecting plate including three or more tab coupling portions electrically connected to the first electrode tab, and a can coupling portion extending from ends of the tab coupling portions toward the opening portion of the battery can and having a continuous outer peripheral surface electrically connected to an inner surface of the battery can, and a top cap configured to cover the opening portion of the battery can.

## Description

### TECHNICAL FIELD

This application claims priority to and the benefit of Korean Patent Application No. 10-2021-0030315 filed with the Korean Intellectual Property Office on March 8, 2021, the entire contents of which are incorporated herein by reference.

The present invention relates to a cylindrical secondary battery, a battery pack, and a transport means including the same.

### BACKGROUND ART

A cylindrical secondary battery in the related art generally has a structure in which a tab configured to connect a jelly roll and an external terminal is connected to jelly-roll foil by welding. In the cylindrical secondary battery having such a structure, a path for electric current is limited, and resistance of the jelly roll itself is inevitably very high.

Therefore, there has been an attempt to reduce the resistance by increasing the number of tabs that connect the jelly roll and the external terminal. However, the method of merely increasing the number of tabs has a limitation in reducing the resistance to a desired level and ensuring a sufficient path for electric current.

Recently, there is a need to develop a jelly-roll structure and a current collecting plate structure to reduce the resistance of the jelly roll itself. In particular, there is a great need to develop a jelly-roll structure and a current collecting plate structure for a device that requires a battery pack with a high output and a high capacity like a battery pack for an electric vehicle.

In addition, there is a need to develop a cylindrical secondary battery having a structure capable of maintaining an improved coupling force between a current collecting plate and a battery can and develop a current collecting plate structure to be applied to the cylindrical secondary battery.

### DETAILED DESCRIPTION OF THE INVENTION

### TECHNICAL PROBLEM

The present invention has been made in an effort to solve the above-mentioned problem, and an object of the present invention is to provide a cylindrical secondary battery, a battery pack, and a transport means including the same.

Another object of the present invention is to provide a cylindrical secondary battery including a current collecting plate having a structure capable of improving a coupling force of a part coupled to a battery can and improving energy density.

However, technical problems to be solved by the present invention are not limited to the above-mentioned technical problems, and other technical problems, which are not mentioned in the present specification, may be clearly understood by those skilled in the art from the following descriptions of the invention.

### TECHNICAL SOLUTION

To achieve the above-mentioned objects, the present invention provides a cylindrical secondary battery, a battery pack, and a transport means including the same.

An embodiment of the present invention provides a cylindrical secondary battery including: an electrode assembly having a structure in which a first electrode, a second electrode, and a separator interposed between the first and second electrodes are sequentially stacked and wound, the first electrode including a non-coated portion having no active material applied onto one surface of a current collector, the non-coated portion including a first electrode tab bent from an end of the electrode assembly toward a winding center or an outer periphery;
a battery can configured to accommodate the electrode assembly through an opening portion formed at one side of the battery can;
a current collecting plate including three or more tab coupling portions electrically connected to the first electrode tab, and a can coupling portion extending from ends of the tab coupling portions toward the opening portion of the battery can and having a continuous outer peripheral surface electrically connected to an inner surface of the battery can; and
a top cap configured to cover the opening portion of the battery can;
a cylindrical secondary battery including the above is provided.

Another embodiment of the present invention provides a battery pack including the cylindrical secondary battery.

Still another embodiment of the present invention provides a transport means including the battery pack.

### ADVANTAGEOUS EFFECTS

According to one aspect of the present invention, a process of welding the negative electrode current collecting plate and the battery can is eliminated. Therefore, the process of manufacturing the cylindrical secondary battery may be simplified, thereby improving productivity.

In addition, because the current collecting plate does not extend to the crimping portion, thereby avoiding the likelihood of leakage caused by the partial interference caused by the insertion of the current collecting plate.

However, the effects obtained by the present invention are not limited to the aforementioned effects, and other technical effects, which are not mentioned in the present specification, will be clearly understood by those skilled in the art from the following description of the present invention.

### BRIEF DESCRIPTION OF DRAWINGS

FIG. 1 is a view illustrating a current collecting plate in the related art.
FIG. 2 is a cross-sectional view of a cylindrical secondary battery to which the current collecting plate in the related art illustrated in FIG. 1 is applied.
FIG. 3 is a view illustrating a current collecting plate according to an embodiment of the present invention.
FIG. 4 is a view illustrating a lateral cross-section of a cylindrical secondary battery to which the current collecting plate illustrated in FIG. 3 is applied.
FIG. 5 is a view illustrating a battery pack including the cylindrical secondary battery according to the embodiment.
FIG. 6 is a view illustrating a transport means including the battery pack according to the embodiment.

### EXAMPLES FOR CARRYING OUT THE INVENTION

The present invention may be variously modified and may have various embodiments, and particular embodiments illustrated in the drawings will be described below in detail. However, the description of the specific embodiments is not intended to limit the present invention to the particular exemplary embodiments, but it should be understood that the present invention is to cover all modifications, equivalents and alternatives falling within the technical spirit and technical scope of the present invention.

In the present specification, the terms such as "first," "second," "A," "B," and other numerical terms may be used herein only to describe various elements, but these elements should not be limited by these terms. These terms are used only to distinguish one constituent element from another constituent element. For example, a first component may be named a second component, and similarly, the second component may also be named the first component, without departing from the scope of the present invention.

In the present specification, the term "and/or" includes any and all combinations of a plurality of the associated listed items.

In the present specification, unless otherwise separately stated in the present specification, the singular expressions used herein are intended to include the plural expressions.

In the present application, the terms "comprises," "comprising," "includes," "including," "containing," "has," "having" or other variations thereof are inclusive and therefore specify the presence of stated features, numbers, steps, operations, processes, components, members, and/or combinations thereof, but do not preclude the presence or addition of one or more other features, numbers, steps, operations, processes, components, members, and/or combinations thereof.

In the present specification, the term "secondary battery" refers to a battery that may be repeatedly used for a long period of time by being recharged. The secondary batteries may be classified into a nickel-cadmium battery, a lithium-ion secondary battery, and the like depending on the type of electrode active material. The secondary batteries may be classified into a pouch-type secondary battery, an angular secondary battery, a cylindrical secondary battery, and the like depending on the shape of the secondary battery.

In the present specification, the secondary battery may include a battery can that accommodates an electrode assembly. The battery can may have a cylindrical shape.

For example, the cylindrical secondary battery may be a cylindrical secondary battery having a ratio of a form factor larger than about 0.4 (a ratio of the form factor is defined as a value made by dividing a diameter of the cylindrical secondary battery by a height of the cylindrical secondary battery, i.e., a ratio of a diameter Φ to a height H).

In this case, the form factor means a value indicating the diameter and the height of the cylindrical secondary battery.

In the present specification, the term "cylindrical secondary battery" refers to a secondary battery having a cylindrical shape or a shape similar to the cylindrical shape. Because the cylindrical secondary battery has a high energy density per volume, the cylindrical secondary battery is widely used for high-capacity electronic and electrical devices. A plurality of cylindrical secondary batteries may be used and combined to constitute a battery pack.

In addition, the term "cylindrical secondary battery" may mean a structure in which a rivet penetratively inserted into a bottom surface (opposing surface) opposite to an opening portion of the cylindrical secondary battery is used as a cathode, and the battery can itself is used as an anode, for example.

In the present specification, the term "cylindrical secondary battery" may be 46110 cell, 48750 cell, 48110 cell, 48800 cell, or 46800 cell, for example. In the numerical value indicating the form factor, the first two numbers indicate a diameter of the cell, the next two numbers indicate a height of the cell, and the final number 0 indicates that a cross-section of the cell is circular. If the height of the cell is 100 mm or more, three numbers are required to indicate the height of the cell, and thus the last number "0" may be omitted.

In addition, the term "first electrode" refers to an anode, and the term "second electrode" refers to a cathode or vice versa.

In addition, the battery can refers to a receptacle having an approximately cylindrical shape having an opening portion at one side thereof and is made of a metallic material having conductivity. A lateral surface of the battery can and a surface opposite to the opening portion may be generally integrated. That is, based on a height direction of the battery can, the battery can is generally configured such that an upper end thereof is opened, and a lower end thereof is closed in a region except for a central portion. The lower surface of the battery can may have an approximately flat shape. The battery can accommodates the electrode assembly through the opening portion formed at one side based on the height direction thereof. The battery can may also accommodate the electrolyte through the opening portion.

Unless otherwise defined, all terms used herein, including technical or scientific terms, have the same meaning as commonly understood by those skilled in the art to which the present invention pertains.

Hereinafter, exemplary embodiments according to the related art and the present invention will be described in detail with reference to the accompanying drawings.

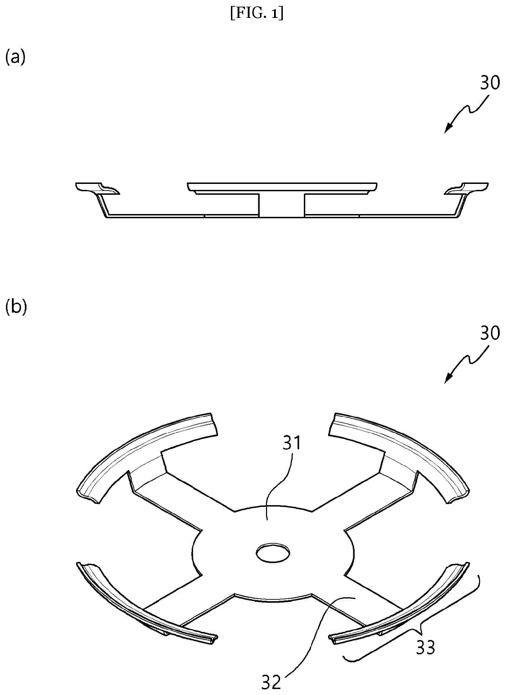

FIG. 1 is a view illustrating a current collecting plate in the related art, in which FIG. 1A is a side view of the current collecting plate, and FIG. 1B is a top plan view of the current collecting plate. The current collecting plate 30 includes tab coupling portions 32 extending from a central portion 31 to can coupling portions 33 and coupled to first electrode tabs 11. For example, four tab coupling portions 32 are illustrated. The can coupling portions 33 of the current collecting plate 30 have discontinuous outer peripheral surfaces.

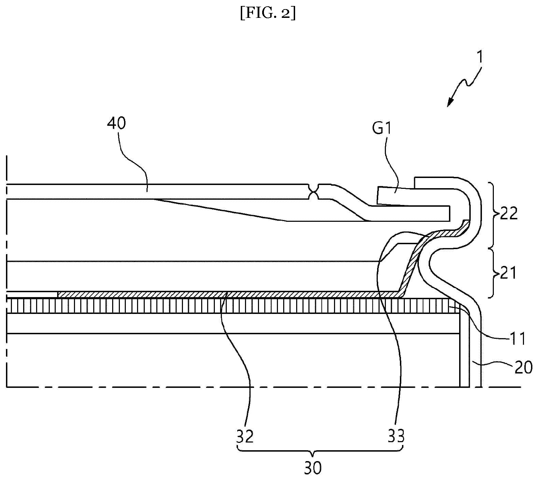

FIG. 2 is a cross-sectional side view illustrating a cylindrical secondary battery to which the current collecting plate in the related art illustrated in FIG. 1 is applied. The can coupling portion 33 of the current collecting plate 30 extends to a beading portion 21 and a crimping portion 22. In this case, the current collecting plate 30 interferes with an injection-molded product, which may weaken a sealing structure of the battery can and causes a leak. In other words, when the can coupling portion 33 extends to the crimping portion 22, sealability made by a sealing gasket G1 interposed between a top cap 40 and a battery can 20 of the crimping portion deteriorates.

An embodiment of the present invention provides a cylindrical secondary battery including: an electrode assembly having a structure in which a first electrode, a second electrode, and a separator interposed between the first and second electrodes are sequentially stacked and wound, the first electrode including a non-coated portion having no active material applied onto one surface of a current collector, the non-coated portion including a first electrode tab bent from an end of the electrode assembly toward a winding center or an outer periphery;
a battery can configured to accommodate the electrode assembly through an opening portion formed at one side of the battery can;
a current collecting plate including three or more tab coupling portions electrically connected to the first electrode tab, and a can coupling portion extending from ends of the tab coupling portions toward the opening portion of the battery can and having a continuous outer peripheral surface electrically connected to an inner surface of the battery can; and
a top cap configured to cover the opening portion of the battery can.

A cylindrical secondary battery comprising the above is provided.

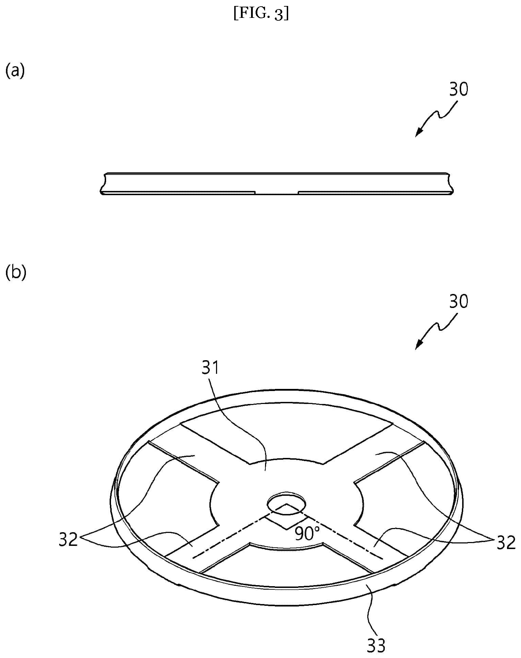

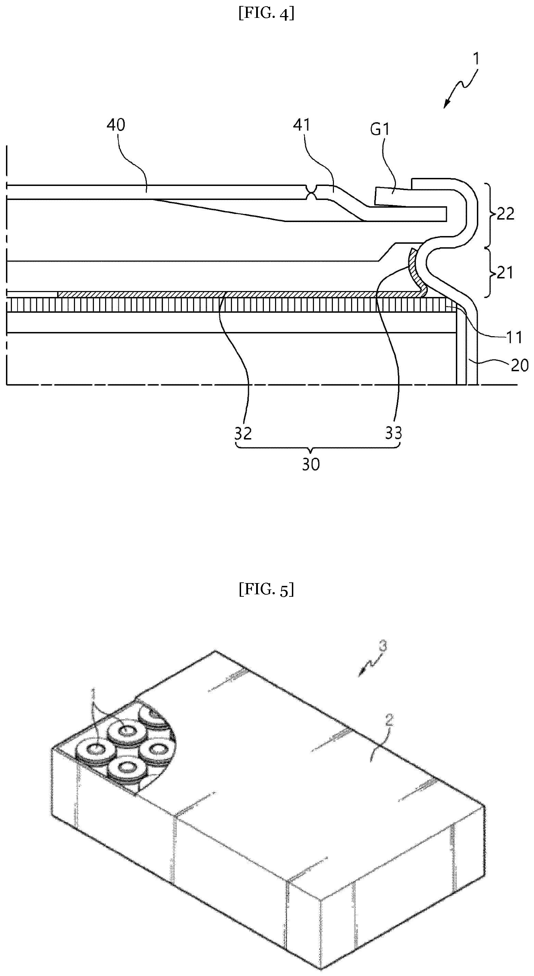

In the embodiment, referring to FIGS. 3 and 4, the first electrode tabs 11 may be coupled to the tab coupling portions 32 of the current collecting plate 30, and the can coupling portion 33 may have a continuous outer peripheral shape. The current collecting plate 30 includes three or more tab coupling portions 32 coupled to the first electrode tabs 11, and the can coupling portion 33 having the continuous outer peripheral surface extending upward from the ends of the tab coupling portions 32 and electrically coupled to the inner surface of the battery can.

According to the embodiment, since the current collecting plate has the continuous outer peripheral surface, the current collecting plate and the battery can are coupled stably.

Another embodiment of the present invention provides the cylindrical secondary battery in which the tab coupling portions extend from the central portion of the current collecting plate to the can coupling portion and are in contact with the first electrode tab.

In the embodiment, referring to FIGS. 3 and 4, the current collecting plate 30 includes the central portion 31 disposed in a core region of the current collecting plate 30. The central portion 31 may have an approximately circular shape. Since the tab coupling portions 32 of the current collecting plate 30 extend outward from the central portion 31 to the can coupling portion 33, the tab coupling portions 32 may be coupled to the first electrode tabs 11.

According to the cylindrical secondary battery according to the embodiment, the electrode tab and the tab coupling portion are efficiently coupled.

Still another embodiment of the present invention provides the cylindrical secondary battery in which an angle defined between the adjacent tab coupling portions is 40° or more and 140° or less.

In the embodiment, referring to FIG. 3, the angles defined between the adjacent tab coupling portions, among the tab coupling portions 32, may be equal to or different from one another. The angles defined between the adjacent tab coupling portions may each independently be 40° or more, 50° or more, 60° or more, 70° or more, 80° or more, or 90° or more. Meanwhile, referring to FIG. 3, the angles defined between the adjacent tab coupling portions, among the tab coupling portions 32, may be equal to or different from one another. The angles defined between the adjacent tab coupling portions may each independently be 140° or less, 130° or less, 120° or less, 110° or less, or 100° or less. Meanwhile, referring to FIG. 3, all the angles defined between the adjacent tab coupling portions, among the tab coupling portions 32, may be 90°.

According to the cylindrical secondary battery according to the embodiment, the electrode tab and the tab coupling portion are efficiently coupled.

Yet another embodiment of the present invention provides the cylindrical secondary battery having the beading portion press-fitted inward and formed at a lateral end of the battery can disposed adjacent to the opening portion.

In the embodiment, referring to FIGS. 3 and 4, the beading portion 21 is provided in the opening portion (not illustrated) of the battery can 20 and has a shape press-fitted inward and disposed adjacent to the opening portion of the upper end of the battery can 20. The beading portion 21 is formed at an upper side of the electrode assembly 10. In a region in which the beading portion 21 is formed, an inner diameter of the battery can 20 is smaller than a diameter of the electrode assembly 10.

The beading portion 21 means a region in which a groove bent toward the inside of the battery is formed so that the sealing gasket G1 is seated on the upper side of the battery can 20. The beading portion 21 serves to provide a support surface on which not only the sealing gasket G1 but also the top cap 40 may be seated. In addition, the beading portion 21 may provide the support surface on which at least a part of an edge of the current collecting plate 30 to be described below may be seated and coupled. That is, at least a part of the edge of the current collecting plate 30 according to the present invention and/or the edge of the top cap 40 according to the present invention may be seated on an upper surface of the beading portion 21.

For example, to stably support at least a part of the edge of the current collecting plate 30 and/or the edge of the top cap 40, at least a part of the upper surface of the beading portion 21 may extend in a direction approximately parallel to a lower surface of the battery can 20, i.e., a direction approximately perpendicular to a sidewall of the battery can 20.

The can coupling portion may be pressed by the beading portion of the cylindrical secondary battery according to the embodiment, such that the current collecting plate may be stably fixed in the battery can.

Still yet another embodiment provides the cylindrical secondary battery having a structure in which the can coupling portion of the current collecting plate adjoins the beading portion and is press-fitted inward.

In the embodiment, the can coupling portion of the current collecting plate and the lateral end of the battery can are press-fitted together. In addition, the press-fitting is included in the beading process.

Specifically, referring to FIGS. 3 and 4, the can coupling portion 33 of the current collecting plate 30 and the lateral end of the battery can 20 are press-fitted inward together. As described above, the current collecting plate 30 and the battery can 20 are in contact with each other while being deformed by the beading process. Therefore, the battery can 20 and the current collecting plate 30 may be in contact with each other without a welding process.

Another further embodiment provides the cylindrical secondary battery having the crimping portion formed between the opening portion and the beading portion and bent and extending toward the opening portion.

In the embodiment, referring to FIGS. 3 and 4, the battery can 20 has the crimping portion 22 formed above the beading portion 21. That is, the crimping portion 22 is formed at an upper end of the beading portion.

The crimping portion 22 means a region extending and bent to surround an edge of the top cap 40 disposed above the beading portion 21 by pressing an upper portion of the beading portion 21 including a safety device such as the sealing gasket G1. The top cap 40 may be fixed to the beading portion 21 by the shape of the crimping portion 22.

Alternatively, an innermost point of the beading portion 21 may be positioned radially inward from a distal end point of the crimping portion 22. For example, the distal end point of the crimping portion 22 may be positioned radially outward from the innermost point of the beading portion 21. With this structure, the beading portion 21 may be kept flat even after the sizing process. For example, if the innermost point of the beading portion 21 is positioned radially outward from the distal end point of the crimping portion 22, a radial length of an upper surface of the crimping portion 22 is longer than a radial length of the beading portion 21. In this case, an area of the upper surface of the crimping portion 22, which is an area that receives pressure during the sizing process, increases, and thus the beading portion 21 may not be flat after the sizing process. Therefore, according to the present invention, the innermost point of the beading portion 21 may be positioned radially inward from the distal end of the crimping portion 22.

The cylindrical secondary battery according to the embodiment may implement perfect sealing.

Still another further embodiment provides the cylindrical secondary battery in which the can coupling portion is compressed and fixed by means of the beading portion.

In the embodiment, referring to FIGS. 3 and 4, the can coupling portion 32 is pressed at the time of forming the beading portion 21 formed at an upper end opening portion of the battery can. Therefore, the current collecting plate 30 may be compressed and fixed in the battery can 20, and thus the battery can 20 and the current collecting plate 30 may be electrically connected.

According to the cylindrical secondary battery according to the embodiment, a welding process may be eliminated because the current collecting plate and the battery can are compressed and fixed, thereby simplifying the process of manufacturing the cylindrical secondary battery.

Yet another further embodiment provides the cylindrical secondary battery in which the outer peripheral surface of the can coupling portion extends from a lower end of the beading portion to a lower end of the crimping portion. In other words, the can coupling portion extends to the beading portion but does not extend to the crimping portion.

In the embodiment, referring to FIG. 4, in the cylindrical secondary battery according to the embodiment, the current collecting plate 30 extends only to the beading portion 21 but is not inserted into the crimping portion 22.

In the cylindrical secondary battery according to the embodiment, there is no interference between the current collecting plate 30 and the injection-molded product, which makes it possible to maintain the sealing structure of the battery can 20 and avoid the likelihood of leakage. In particular, since the can coupling portion 33 has a length that does not extend to the crimping portion 22, the can coupling portion 33 may be fixed to the beading portion 21 by the beading pressure.

Still yet another further embodiment provides the cylindrical secondary battery in which an outer diameter portion of the can coupling portion has a circular shape.

In this regard, referring to FIGS. 3 and 4, the outer diameter portion of the can coupling portion 33 has a circular shape.

In the cylindrical secondary battery according to the embodiment, the current collecting plate and the beading portion 21 of the battery can 20 may be stably coupled by an outward force applied by the current collector and a bending force applied by the beading portion of the battery can 20.

A further embodiment provides the cylindrical secondary battery in which the second electrode includes a non-coated portion having no active material applied onto one surface of the current collector,
the non-coated portion includes a second electrode tab bent in a direction from an end of the electrode assembly to a winding center or an outer periphery, and
a second electrode terminal is disposed at a side opposite to the opening portion of the battery can and electrically connected to the second electrode tab.

According to the cylindrical secondary battery according to the embodiment, the resistance of the jelly-roll electrode assembly may be reduced.

The embodiment of the present invention provides a battery pack including any one of the above-mentioned cylindrical secondary batteries.

In the embodiment, FIG. 5 illustrates a battery pack 3 including cylindrical secondary batteries 1 disposed in a pack housing 2.

The battery pack according to the embodiment has a high output and a large capacity.

The embodiment of the present invention provides a transport means including the above-mentioned battery pack.

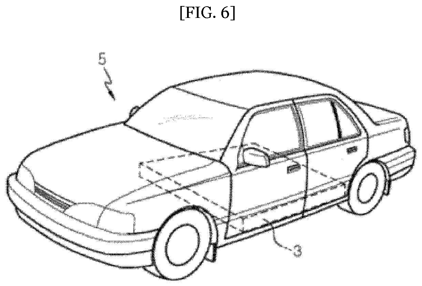

In the embodiment, FIG. 6 illustrates a transport means 5 including the battery pack 3.

The transport means according to the embodiment is excellent in stability and safety because the transport means uses the battery pack having a high output and a large capacity.

In the embodiment, any active material publicly known in the art may be used, without limitation, as the positive electrode active material applied onto the positive plate and the negative electrode active material applied onto the negative plate.

As an example, the positive electrode active material may include an alkaline metal compound expressed by a general chemical formula A[AxMy]O2+z (A includes one or more elements among Li, Na, and K, M includes one or more elements selected from Ni, Co, Mn, Ca, Mg, Al, Ti, Si, Fe, Mo, V, Zr, Zn, Cu, Al, Mo, Sc, Zr, Ru, and Cr, x ≥ 0, 1 ≤ x+y ≤2, and -0.1 ≤ z ≤ 2 in which stoichiometric coefficients x, y, and z are selected so that the compound is kept neutral electrically).

As another example, the positive electrode active material may be an alkaline metal compound xLiM1O2-(1-x)Li2M2O3 (M1 includes one or more elements having average oxidation state 3, M2 includes one or more elements having average oxidation state 4, and 0≤x≤1) disclosed in US 6,677,082, US 6,680,143, and the like.

As still another example, the positive electrode active material may be lithium metal phosphate expressed by a general chemical formula LiaM1xFe1-xM2yP1-yM3zO4-z (M1 includes one or more elements selected from Ti, Si, Mn, Co, Fe, V, Cr, Mo, Ni, Nd, Al, Mg, and Al, M2 includes one or more elements selected from Ti, Si, Mn, Co, Fe, V, Cr, Mo, Ni, Nd, Al, Mg, Al, As, Sb, Si, Ge, V, and S, M3 includes halogen family elements selectively including F, 0 < a ≤ 2, 0 ≤ x ≤ 1, 0 ≤ y ≤ 1, and 0 ≤ z < 1 in which stoichiometric coefficients a, x, y, and z are selected so that the compound is kept neutral electrically) or Li3M2(PO4)3 (M includes one or more elements selected from Ti, Si, Mn, Fe, Co, V, Cr, Mo, Ni, Al, Mg, and Al).

In particular, the positive electrode active material may include primary particles and/or secondary particles in which the primary particles are agglomerated.

As an example, carbon materials, lithium metal or lithium metal compound, silicon or silicon compound, tin or tin compound, and the like may be used as the negative electrode active material. A metal oxide such as TiO2 and SnO2 having electric potential of less than 2 V may also be used as the negative electrode active material. Low-crystalline carbon, high-crystalline carbon, and the like may be used as the carbon material.

A porous polymer film, for example, a porous polymer film made of polyolefin-based polymer such as ethylene homopolymer, propylene homopolymer, ethylene/butene copolymer, ethylene/hexene copolymer, or ethylene/methacrylate copolymer may be used singly as the separator or a stack of the porous polymer films may be used as the separator. As another example, a typical porous non-woven fabric, for example, a non-woven fabric made of high-melting point fiberglass, polyethylene terephthalate fiber, or the like may be used as the separator.

At least one surface of the separator may include a coating layer containing inorganic particles. In addition, the separator itself may be a coating layer containing inorganic particles. The particles constituting the coating layer may be coupled by a binder so that an interstitial volume is present between the adjacent particles.

The inorganic particles may be made of inorganic substance with permittivity of 5 or more. As a non-restrictive example, the inorganic particle may include one or more substances selected from a group consisting of Pb(Zr,Ti)O3(PZT), Pb1-xLaxZr1-yTiyO3(PLZT), PB(Mg3Nb2/3)O3-PbTiO3(PMN-PT), BaTiO3, hafnia(HfO2), SrTiO3, TiO2, Al2O3, ZrO2, SnO2, CeO2, MgO, CaO, ZnO, and Y2O3.

In the embodiment, the cylindrical secondary battery may include an electrolyte. The electrolyte may be a salt having a structure such as A+B-. In this case, A+ includes ions including alkaline metal cations such as Li+, Na+, and K+ or a combination thereof. Further, B- includes one or more anions selected from a group consisting of F-, Cl-, Br-, I-, NO3-, N(CN)2-, BF4-, ClO4-, AlO4-, AlCl4-, PF6-, SbF6-, AsF6-, BF2C2O4-, BC4O8-, (CF3)2PF4-, (CF3)3PF3-, (CF3)4PF2-, (CF3)5PF-, (CF3)6P-, CF3SO3-, C4F9SO3-, CF3CF2SO3-, (CF3SO2)2N-, (FSO2)2N-, CF3CF2(CF3)2CO-, (CF3SO2)2CH-, (SF5)3C-, (CF3SO2)3C-, CF3(CF2)7SO3-, CF3CO2-, CH3CO2-, SCN- , and (CF3CF2SO2)2N-.

In addition, the electrolyte may be dissolved in an organic solvent and used. Propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), γ-butyrolactone, or a mixture thereof may be used as the organic solvent.

While the exemplary embodiments of the present invention have been described above, the present invention is not limited thereto, and various modifications can be made and carried out within the scope of the claims and the detailed description of the invention and also fall within the scope of the invention.

### Explanation of Reference Numerals and Symbols

- 1: Cylindrical secondary battery
- 2: Pack housing
- 3: Battery pack
- 5: Transport means
- 10: Electrode assembly
- 11: First electrode tab
- 20: Battery can
- 21: Beading portion
- 22: Crimping portion
- 30: Current collecting plate
- 31: Central portion
- 32: Tab coupling portion
- 33: Can coupling portion
- 40: Top cap
- G1: Sealing gasket
In view of the foregoing disclosure, the present invention may be implemented in accordance with the following itemized embodiment examples.
Item 1 A cylindrical secondary battery comprising:
   an electrode assembly having a structure in which a first electrode, a second electrode, and a separator interposed between the first and second electrodes are sequentially stacked and wound, the first electrode comprising a non-coated portion having no active material applied onto one surface of a current collector, the non-coated portion comprising a first electrode tab bent from an end of the electrode assembly toward a winding center or an outer periphery;
   a battery can configured to accommodate the electrode assembly through an opening portion formed at one side of the battery can;
   a current collecting plate comprising three or more tab coupling portions electrically connected to the first electrode tab, and a can coupling portion extending from ends of the tab coupling portions toward the opening portion of the battery can and having a continuous outer peripheral surface electrically connected to an inner surface of the battery can; and
   a top cap configured to cover the opening portion of the battery can.
Item 2 The cylindrical secondary battery of claim 1, wherein the tab coupling portions extend from a central portion of the current collecting plate to the can coupling portion and are in contact with the first electrode tab.
Item 3 The cylindrical secondary battery of item 1, wherein an angle between the adjacent tab coupling portions is 40° or more and 140° or less.
Item 4 The cylindrical secondary battery of item 1, comprising:
   a beading portion having a structure press-fitted inward and formed at a lateral end of the battery can disposed adjacent to the opening portion.
Item 5 The cylindrical secondary battery of item 4, wherein the can coupling portion of the current collecting plate has a structure press-fitted inward and adjoining the beading portion.
Item 6 The cylindrical secondary battery of item 5, wherein comprising:
   a crimping portion formed between the opening portion and the beading portion and extending and bent toward the opening portion.
Item 7 The cylindrical secondary battery of item 6, wherein the can coupling portion is compressed and fixed by the beading portion.
Item 8 The cylindrical secondary battery of item 6, wherein an outer peripheral surface of the can coupling portion extends from a lower end of the beading portion to a lower end of the crimping portion.
Item 9 The cylindrical secondary battery of item 1, wherein an outer diameter portion of the can coupling portion has a circular shape.
Item 10 The cylindrical secondary battery of item 1, wherein the second electrode comprises a non-coated portion having no active material applied onto one surface of the current collector, the non-coated portion comprises a second electrode tab bent in a direction from an end of the electrode assembly to the winding center or the outer periphery, and a second electrode terminal is disposed at a side opposite to the opening portion of the battery can and electrically connected to the second electrode tab.
Item 11 A battery pack comprising the cylindrical secondary battery according to any one of items 1 to 10.
Item 12 A transport means comprising the battery pack according to item 11.

## Claims

1. A cylindrical secondary battery comprising:
an electrode assembly (10) having a structure in which a first electrode, a second electrode, and a separator interposed between the first and second electrodes are sequentially stacked and wound, the first electrode comprising a non-coated portion having no active material applied onto one surface of a current collector, the non-coated portion comprising a first electrode tab (11) bent from an end of the electrode assembly (10) toward a winding center or an outer periphery;
a battery can (20) configured to accommodate the electrode assembly (10) through an opening portion formed at one side of the battery can (20);
a current collecting plate (30) comprising three or more tab coupling portions (32) electrically connected to the first electrode tab (11), disposed on the side of the opening portion of the battery can (20) with respect to the electrode assembly (10), the current collecting plate (30) further comprising a can coupling portion (33) connecting ends of the three or more tab coupling portions (32), extending from ends of the tab coupling portions (32) toward the opening portion of the battery can (20) and having a continuous outer peripheral surface electrically connected to an inner surface of the battery can (20); and
a top cap (40) configured to cover the opening portion of the battery can (20).

2. The cylindrical secondary battery of claim 1, wherein the tab coupling portions (32) extend from a central portion (31) of the current collecting plate (30) to the can coupling portion (33) and are in contact with the first electrode tab (11).

3. The cylindrical secondary battery of claim 1 or 2, wherein an angle between the adjacent tab coupling portions (32) is 40° or more and 140° or less.

4. The cylindrical secondary battery of any one of the preceding claims, comprising:
a beading portion (21) having a structure press-fitted inward and formed at a lateral end of the battery can (20) disposed adjacent to the opening portion.

5. The cylindrical secondary battery of claim 4, wherein the can coupling portion (33) of the current collecting plate (30) has a structure press-fitted inward and adjoining the beading portion (21).

6. The cylindrical secondary battery of claim 5, wherein comprising:
a crimping portion (22) formed between the opening portion and the beading portion (21) and extending and bent toward the opening portion.

7. The cylindrical secondary battery of claim 6, wherein the can coupling portion (33) is compressed and fixed by the beading portion (21).

8. The cylindrical secondary battery of claim 6 or 7, wherein an outer peripheral surface of the can coupling portion (33) extends from a lower end of the beading portion (21) to a lower end of the crimping portion (22).

9. The cylindrical secondary battery of any one of the preceding claims, wherein an outer diameter portion of the can coupling portion (33) has a circular shape.

10. The cylindrical secondary battery of any one of the preceding claims, wherein the second electrode comprises a non-coated portion having no active material applied onto one surface of the current collector, the non-coated portion comprises a second electrode tab bent in a direction from an end of the electrode assembly (10) to the winding center or the outer periphery, and a second electrode terminal is disposed at a side opposite to the opening portion of the battery can (20) and electrically connected to the second electrode tab.

11. A battery pack comprising the cylindrical secondary battery according to any one of the preceding claims.

12. A transport means comprising the battery pack according to claim 11.
